# EUROPÄISCHE PATENTSCHRIFT

(11) **EP 0 762 095 B1**
(45) Veröffentlichungstag und Bekanntmachung des Hinweises auf die Patenterteilung: **07.04.1999**
(21) Anmeldenummer: 96111273.7
(22) Anmeldetag: 12.07.1996
(51) Int. Cl.: G01L 5/10, H04R 9/00, D03D 49/18

(54) **Fadenzugkraftsensor mit Tauchspulen-Geber mit Membranstützkörper**
Yarn tension measuring sensor with moving coil transducer with support body for the diaphragm
Capteur pour mesurer la tension d'un fil avec transducteur à bobine mobile avec un corps d'appui pour le diaphragme

(30) Priorität: 26.08.1995 DE 19531448
(43) Veröffentlichungstag der Anmeldung: 12.03.1997
(73) Patentinhaber: W. SCHLAFHORST AG & CO., D-41061 Mönchengladbach (DE)
(72) Erfinder: Sturm, Christian, Dipl.-Ing., 47798 Krefeld (DE)

(56) Entgegenhaltungen:
- EP-B- 0 531 753
- CH-A- 671 632
- DE-A- 3 429 864
- DE-A- 3 534 608
- GB-A- 1 443 491
- US-A- 4 543 832

## Beschreibung

Die Erfindung betrifft einen Fadenzugkraftsensor zum Überwachen der Fadenzugkraft an einem laufenden Faden einer Textilmaschine mit einem elektrodynamischen Tauchspulen-Geber nach dem Oberbegriff des ersten Anspruchs.

Aus der DE 35 34 608 A1 ist ein Druckmeßgerät bekannt, bei dem eine Membrane zwei Medien mit unterschiedlichen Drücken voneinander trennt. Der Druckunterschied wirkt auf die Membrane, die Kraftaufnehmerelement genannt wird, und verformt sie. Mit dem Zentrum der Membrane ist ein Übertragungsglied verbunden, dessen Verschiebung aufgrund der Verformung der Membrane von einem Meßwertaufnehmer festgestellt und zur Ermittlung des Druckunterschieds genutzt wird.

Ein obengenannter Sensor ist aus der EP 0 531 753 B1 bekannt. Elektrodynamische Tauchspulen-Geber sind zu Messung der Fadenzugkraft an schnell laufenden Fäden besonders geeignet, da mit ihnen auch hochfrequente Fadenzugkraftschwankungen ermittelt werden können. Um hochfrequente Schwankungen der Kraft auf den Meßfühler und damit auf die Tauchspule möglichst trägheitslos weitergeben zu können, wird die Tauchspule in Membranen gelagert. Die Tauchspule sitzt in der Regel zentrisch auf der Achse des Meßfühlers, die wiederum zentrisch durch die Membranen geführt wird und mit diesen fest verbunden ist.

Es wirkt keine Druckkraft auf die Membranen, wie es bei dem bekannten Druckmeßgerät der Fall ist. Auf beiden Seiten der Membranen herrscht derselbe Druck. Eine Auslenkung der Membranen ist also kein Maß für eine Änderung der Fadenzugkraft. Die Membranen dienen ausschließlich zur Lagerung der Tauchspule.

Die Fadenzugkraftschwankungen wirken auf den am Faden anliegenden Meßfühler, der mit der Tauchspule verbunden ist. Jede Lageänderung der Tauchspule aufgrund einer Krafteinwirkung auf den Meßfühler wird sensorisch erfaßt und unmittelbar der Stromfluß durch die Tauchspule so verändert, daß eine Kraft der vom Faden erzeugten axialen Kraft am Meßfühler in gleicher Stärke entgegenwirkt. Durch den Einsatz eines Positionierregelkreises werden die durch Fadenspannungsschwankungen hervorgerufenen minimalen Positionsänderungen der Tauchspule sofort zu Null ausgeregelt. Da dieser elektrodynamische Linearantrieb ein lineares Kraft-Strom-Verhalten aufweist, ist der Tauchspulenstrom direkt proportional der Fadenspannung.

Die Membranen sind in der Regel scheibenförmig. Zur Erzeugung einer linearen Kraft-Weg-Kennlinie können sie mit konzentrisch angeordneten Sicken oder anderen Konturen versehen sein.

Wegen der geringen Massen und der geringen Größe der Tauchspulen-Geber sind bei den Kräften, wie sie beispielsweise an zu spulenden Fäden auftreten, die Membranen sehr dünn, beispielsweise unter einem zehntel Millimeter, und deshalb gegen unsachgemäße Behandlung empfindlich. Wird beispielsweise an einer Membrane mit konzentrisch angeordneten Sicken eine der Sicken von ihrer erhabenen Seite her örtlich eingedrückt, reicht in der Regel die Elastizität der Membrane nicht aus, um diesen Fehler rückgängig zu machen. Die Verformung bleibt und verhindert damit eine bestimmungsgemäße Möglichkeit des Schwingens der Membrane.

Eine Abdeckung der Membranen zu ihrem Schutz ist nicht immer möglich. Insbesondere bei einem Einsatz in Textilmaschinen ist eine Abdeckung einer einen Taster am laufenden Faden tragende Membrane nicht möglich, da sich zwischen Membrane und Abdeckung aufgrund des Faserflugs Staubansammlungen bilden würden, welche die Funktion der Membrane beeinträchtigen.

Aufgabe der vorliegenden Erfindung ist es, die Funktionsfähigkeit von Membranen, auf welchen die Tauchspulen von elektrodynamischen Tauchspulen-Gebern gelagert sind, zu erhalten.

Die Lösung der Aufgabe erfolgt erfindungsgemäß mit Hilfe der kennzeichnenden Merkmale des ersten Anspruchs. Weitere vorteilhafte Ausgestaltungen der Erfindung werden in den Unteransprüchen beansprucht.

Der erfindungsgemäße Stützkörper hinter der Membrane verhindert wirkungsvoll eine Deformierung der Membrane. Dadurch, daß die der Membrane zugewandte Seite des Stützkörpers eine Kontur aufweist, die im wesentlichen dem Verlauf der Kontur der dem Stützkörper zugewandten Seite der Membrane bei einer meßbedingten maximal möglichen Auslenkung zum Stützkörper hin angepaßt ist, ist es nicht möglich, die Membrane so zu verformen, daß eine bleibende, die Funktion der Membrane beeinträchtigende Deformierung entsteht.

Der Abstand zwischen der Membrane und dem Stützkörper ist mindestens so groß, daß die Membrane bei ihrer meßbedingten maximalen Auslenkung zum Stützkörper hin diesen gerade noch nicht berührt. Dadurch wird eine bestimmungsgemäße Funktion des Tauchspulen-Gebers nicht behindert, andererseits wird jede über diese maximale Auslenkung hinausgehende Beanspruchung der Membrane durch den Stützkörper abgefangen und damit verhindert. Der Abstand zwischen dem Stützkörper und der Membrane bei ihrer meßbedingten maximalen möglichen Auslenkung liegt beispielsweise zwischen 0,3 und 0,1 mm. Der Abstand zwischen Membrane und Stützkörper während der bestimmungsgemäßen Meßvorgänge ist außerdem so groß gewählt, daß die Membrane, die während der hochfrequenten Messungen in Schwingung gerät, den Stützkörper nicht berührt. Solche Berührungen würden dem Meßvorgang beeinträchtigen und die Meßergebnisse verfälschen.

Um einen optimalen Schutz der Membranen zu erreichen, ist die Kontur des Stützkörpers der Kontur der Membrane in ihrer meßbedingten maximal möglichen Auslenkung zum Stützkörper hin entsprechend ausgeformt, so daß bei der meßbedingten maximalen Auslenkung der Membrane zwischen der Kontur der Membrane und der Kontur des Stützkörpers ein im wesentlichen konstanter Abstand herrscht. Der minimale, konstante Abstand verhindert, daß jede über den bestimmungsgemäßen Gebrauch hinausgehende Auslenkung der Membrane verhindert wird, ohne daß bleibende Schäden an der Membrane entstehen.

Das ist besonders wichtig bei Membranen, die durch konzentrisch angeordnete Sicken versteift werden. Sicken sind besonders empfindlich gegen örtliche Verformungen. Eine eingedrückte Sicke beeinträcht die Funktion der Membrane erheblich und kann sie sogar unmöglich machen. Durch die Ausformung einer Gegenkontur der Sicken in dem Stützkörper legt sich die Membrane bei einer nicht bestimmungsgemäßen Verformung vollständig an den Stützkörper an.

In einer vorteilhaften Ausgestaltung der Erfindung kann der Stützkörper als Spritzguß- oder Druckgußteil gefertigt sein. Spritzgußkörper aus Kunststoff oder Druckgußkörper aus Metall, sind in hohen Stückzahlen maßhaltig und billig herzustellen.

Die erforderliche Kontur ist im Negativ nur einmal in das formgebende Werkzeug einzubringen.

Stützkörper und die Membrane können zu einer Baueinheit zusammengefaßt sein. Damit entfallen Zentrierungsarbeiten beim Einsetzen der Membrane in den Tauchspulen-Geber und die Membrane ist beim Verkleben des die Tauchspule tragenden Tasters mit der Membrane optimal gegen unsachgemäße Behandlung geschützt.

Anhand eines Ausführungsbeispiels wird die Erfindung näher erläutert.

Es zeigen:
**Fig. 1** eine schematische Darstellung eines elektrodynamischen Tauchspulen-Gebers, der als Fadenzugkraft-Sensor in einer Textilmaschine eingesetzt wird, vergrößert und im Schnitt,
**Fig. 2** eine beschädigte Membrane mit einer eingedrückten Sicke, im Schnitt,
**Fig. 3** den Stützkörper mit der Membrane als Baueinheit, im Schnitt, und
**Fig. 4** ein weiteres Ausführungsbeispiel eines Stützkörpers, im Schnitt.

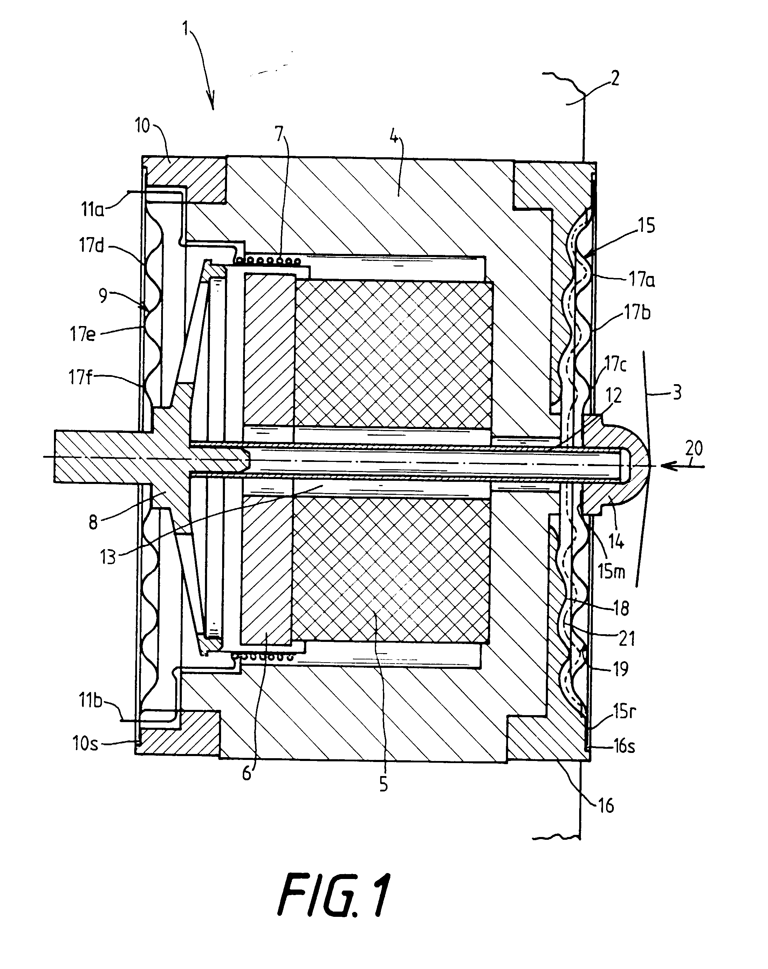

In Fig. 1 ist ein elektrodynamischer Tauchspulen-Geber im Schnitt dargestellt, der als Fadenzugkraftsensor in einer Textilmaschine eingesetzt wird. Es sind nur die zum Verständnis der Erfindung beitragenden Merkmale dargestellt und erläutert.

Der Fadenzugkraftsensor 1 ist in einer hier nicht dargestellten Textilmaschine in einem Gehäuse eingebaut, dessen Kontur 2 hier angedeutet ist. Das Gehäuse 2 umschließt den Fadenzugkraftsensor bis auf die freiliegende Frontseite, die dem Meßobjekt, hier einem laufenden Faden 3, zugewandt ist. Die Membrane ist nicht abgedeckt, weil sich zwischen einer Abdeckung und der Membrane Staub und Faserflug setzen könnte, der die Funktion der Membrane behindern würde.

Das topfartige Gehäuse 4 ist Bestandteil des Magnetsystems. Im Innern des Gehäuses 4 ist zentrisch angeordnet ein Permanentmagnet 5, der eine Polscheibe 6 trägt. Die Polscheibe 6 wird von der Tauchspule 7 ringförmig umschlossen. Die Tauchspule 7 wird von einem Spulenträger 8 gehalten, der einerseits zentrisch in einer Membrane 9 gelagert ist, die auf einem Ring 10 geklebt das Gehäuse 4 auf der dem Faden 3 abgewandten Seite verschließt. Mit 11a und 11b sind die Anschlüsse der Tauchspule 7 bezeichnet. Die Anschlüsse der Tauchspule führen zu einer hier nicht dargestellten Steuereinrichtung. Eine solche Steuereinrichtung ist bespielsweise aus der EP 0 531 753 B1 bekannt.

Der Spulenträger 8 trägt ein Röhrchen 12, das durch die zentrische Bohrung 13 der Polscheibe und des Permanentmagneten sowie des Gehäuses 4 geführt ist und aus dem Gehäuse 4 herausragt. An seinem Ende trägt es den Taster 14, über den der Faden 3 läuft. Der Taster 14 ist mit einer kreisförmigen Membrane 15 so verbunden, daß er zentrisch im Membranenmittelpunkt 15 m angeordnet ist. Die Membrane 15 ist mit ihrem äußeren Umfangsrand 15r auf die ringförmige Stirnfläche 16s des erfindungsgemäßen Stützkörpers 16 geklebt.

Die Form der Membranen 9 und 15 ist identisch. Jede der beiden Membranen 9 und 15 weist drei Sicken 17a, 17b und 17c sowie 17d, 17e und 17f auf. Sie sind gleich hoch und bilden konzentrische Ringe. Die Membranen sind so angeordnet, daß die Sicken jeweils nach außen weisen.

Der Stützkörper 16 weist auf seiner der Membrane 15 zugewandten Seite eine Kontur 18 auf, die im wesentlichen dem Verlauf der Kontur 19 der dem Stützkörper 16 zugewandten Seite der Membrane folgt. Die Kontur 18 des Stützkörpers 16 hat die Aufgabe, die Membrane 15 insbesondere bei unbeabsichtigten punktuellen Belastungen der Sicken abzustützen. Dadurch wird ein Eindrücken der Sicken vermieden. Gerade eine punktuelle Belastung der Sicken kann bei bestimmten Materialien, beispielsweise bei Polycarbonaten, zu Knickstellen führen, die die Struktur der Membranoberfläche zerstören und sie damit unbrauchbar machen. Der Stützkörper verhindert weiterhin großflächige plastische Verformungen und über die bestimmungsgemäßen Auslenkungen beim Fadenzugkraftprüfen hinausgehende Verformungen. Selbst wenn es nur zu elastisch rückverformbaren Eindrücken kommt, kann trotzdem die Membrane unbrauchbar werden, wenn sie von der zugänglichen Frontseite her eingedrückt wird, aber von der Rückseite nicht mehr zugängig ist, um die Verformung wieder herauszudrücken.

Damit der elektrodynamische Tauchspulen-Geber seine Funktion erfüllen kann, muß der Taster 14 eine Hin- und Herbewegung ausführen können. Die Membranen müssen also im Bereich der aufzunehmenden Meßwerte ungehindert schwingen können.

Im vorliegenden Ausführungsbeispiel drückt der Faden 3 in Pfeilrichtung 20 gegen den Taster 14. Die Fig. 1 gibt die Stellung der Membrane 15 in ihrer nicht ausgelenkten Stellung wieder. Die meßbedingte maximale Auslenkung der Membrane ist durch den gestrichelt wiedergegebenen Konturverlauf 21 in Fig. 1 eingezeichnet. Bei dieser maximalen meßbedingten Auslenkung darf die Membrane 15 noch nicht an die Kontur 18 des Stützkörpers 16 zur Anlage kommen. Der Abstand zwischen der Membrane 15 und der Kontur 18 des Stützkörpers 16 soll vorteilhaft mindestens 0,1 Millimeter betragen. Im vorliegenden Ausführungsbeispiel sind die Abstände zwischen der Membrane 15 und der Kontur 18 des Stützkörpers 16 zur Verdeutlichung über das tatsächliche Abstandsverhältnis hinaus vergrößert dargestellt.

Wie aus der Fig. 1 ersichtlich, ist die Kontur 18 des Stützkörpers 16 im wesentlichen der Kontur 19 der Membrane 15 angepaßt und trägt der meßbedingten maximalen Auslenkung 21 durch ein Zurückweichen der Kontur 18 zur Mitte 15 m der Membrane hin Rechnung.

Der Stützkörper 16 kann aus einem Spritzgußteil bestehen, beispielsweise aus einem Kunststoff, da die komplizierte Oberflächenform der Kontur 18 einfach und billig auf einem Spritzgußteil wiedergegeben werden kann. Wird auf den Rand dieses Spritzgußteils bereits die Membrane 15 aufgeklebt, bevor der elektrodynamische Tauchspulen-Geber montiert wird, ist die Membrane 15 beim Ankleben des Tasters 14 und bei der anschließenden Montage bereits vorteilhaft gegen Beschädigungen geschützt.

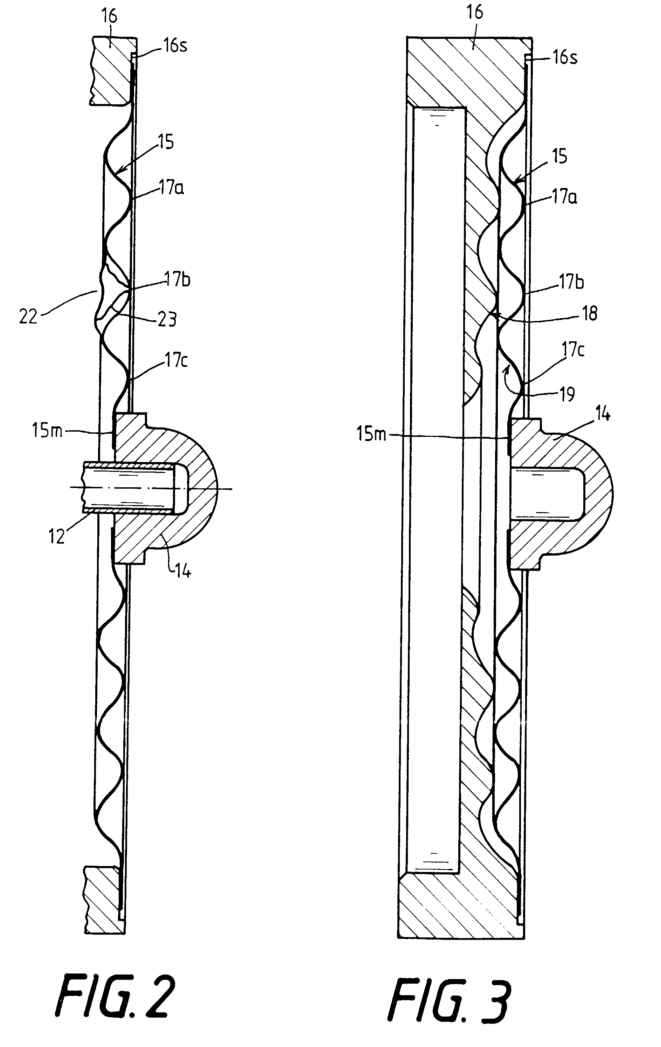

Fig. 2 zeigt vergrößert gegenüber Fig. 1 eine beschädigte Membrane 15. Wie ersichtlich, ist die Sicke 17b örtlich eingedrückt worden, was eine Deformationsstelle 22 hervorgerufen hat. Solche Deformationen können beispielsweise durch Fingernägel oder Schraubendreher hervorgerufen werden und führen beim Eindrücken der Sicke häufig auch zu Knickstellen 23, die eine Zerstörung des Materials verursachen. In einem solchen Fall ist die Membrane funktionsunfähig. Da die Membrane beim Auftreffen eines Gegenstandes, sofern er nicht bereits beim Auftreffen aufgrund seiner scharfen Kontur die Membrane zerstört, nachgibt, bietet der erfindungsgemäße Stützkörper einen sicheren Schutz vor Beschädigungen, da er die nachgebende Membrane auffängt und unterstützt. Dadurch wird ein weiteres Durchbiegen oder örtliches Verformen, was schließlich zu einer Deformationsstelle führt, verhindert.

Fig. 3 zeigt als vergrößerte Einzelheit der Fig. 1 die Membrane 15 mit dem Stützkörper 16 zu einer einbaufertigen Baueinheit vereinigt. Der Taster 14 ist bereits im Zentrum 15m der Membrane 15 aufgeklebt worden.

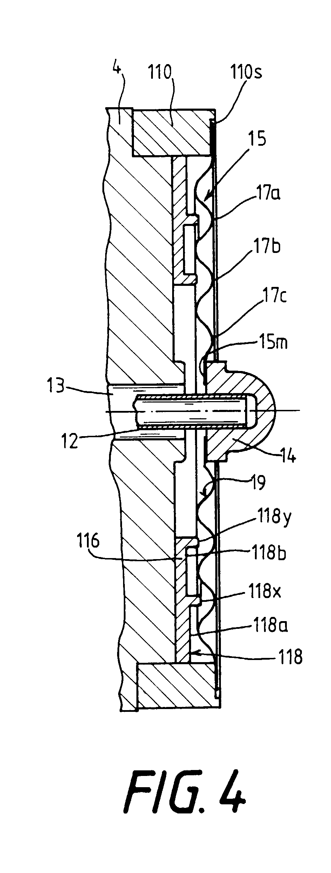

In den Fig. 1 und 3 wird ein Idealverlauf der Kontur 18 des Stützkörpers 16 gezeigt. Die Funktion des Schutzes der Sicken erfüllt auch bereits eine Scheibe abgestufter Dicke mit zwei konzentrischen, abgestuften Stegen, die jeweils hinter den zwei äußersten, am stärksten gefährdeten Sicken angeordnet sind. Ein Ausführungsbeispiel ist dafür in Fig. 4 wiedergegeben. Im Ausführungsbeispiel nach Fig. 4 sind alle gegenüber dem vorhergehenden Ausführungsbeispiel unverändert gebliebenen Merkmale mit denselben Bezugsziffern bezeichnet. Im Ausführungsbeispiel nach Fig. 4 ist die Membrane 15 an die Stirnseite 110s eines Rings 110 geklebt, der mit dem Ring 10, an dem die Membrane 9 geklebt ist, in Abmessung und Form identisch ist. An die Stirnfläche des Bodens des topfförmigen Gehäuses 4 ist eine Scheibe 116 als Stützkörper geklebt. Die Scheibe 116 wird auf ihrem Umfang von dem Ring 110 zentriert. Die Scheibe weist auf ihrer, der Membrane 15 zugewandten Kontur 118 zwei Zonen 118a und 118b unterschiedlicher Dicke auf, die dem Konturverlauf der Membrane 15 während einer meßbedingten maximale Auslenkung Rechnung tragen. Zur Abstützung der Sicken 17a und 17b, die am meisten durch Beschädigungen und Eindrücken gefährdet sind, dienen ringförmige Leisten 118x beziehungsweise 118y, die ebenfalls in ihrer Höhe im Hinblick auf die meßbedingte maximale Auslenkung eine abgestufte Höhe aufweisen.

Der Vorteil des Stützkörpers 16 nach dem vorhergehenden Ausführungsbeispiel gegenüber dem Stützkörper 116 liegt darin, daß sich dort die Membrane 15 flächig an den Stützkörper anlegen kann, während beim Stützkörper 116 die Membrane nur ringförmig in den Sickenbergen und Sickentälern unterstützt wird. Der Stützkörper 116 dagegen bedarf keiner komplizierten Formgebung und ist deshalb einfacher herzustellen, was insbesondere bei geringen Stückzahlen vorteilhaft ist.

## Patentansprüche

1. Fadenzugkraftsensor (1) zum Überwachen der Fadenzugkraft an einem laufenden Faden (3) einer Textilmaschine mit einem elektrodynamischen Tauchspulen-Geber, dessen Tauchspule (7) an zwei voneinander beabstandeten flexiblen, dünnwandigen Halterungen (9, 15) gelagert ist, wobei die einem Taster (14) für den laufenden Faden (3) benachbarte Halterung (15) von ihrer Vorderseite her zugängig ist,
dadurch gekennzeichnet,
- daß die flexible, dünnwandige Halterung (15) konzentrisch angeordnete Sicken (17a, 17b, 17c) aufweist,
- daß auf der der Tauchspule (7) zugewandten Seite der flexiblen, dünnwandigen Halterung (15) mit geringem Abstand zu dieser ein Stützkörper (16; 116) angeordnet ist,
- daß die der Halterung (15) zugewandten Seite des Stützkörpers (16; 116) eine Kontur (18; 118) aufweist, die im wesentlichen der dem Stützkörper (16; 116) zugewandten Kontur (19) der Halterung (15) angepaßt ist und
- daß der Abstand zwischen der flexiblen, dünnwandigen Halterung (15) und dem Stützkörper (16; 116) so groß ist, daß auch bei einer meßbedingten maximalen Auslenkung (21) der Halterung (15) zum Stützkörper (16; 116) hin die Halterung (15) die Kontur (18; 118) des Stützkörpers (16; 116) nicht berührt.

2. Elektrodynamischer Tauchspulen-Geber nach Anspruch 1,
dadurch gekennzeichnet, daß der Abstand zwischen Stützkörper (16; 116) und Membrane (15) sowie die Kontur (18) des Stützkörpers (16; 116) so gewählt sind, daß bei der meßbedingten maximalen Auslenkung (21) der Membrane (15) zwischen den Konturen (18, 19) ein im wesentlichen konstanter Abstand besteht.

3. Elektrodynamischer Tauchspulen-Geber nach Anspruch 2,
dadurch gekennzeichnet, daß bei einer meßbedingten maximal möglichen Auslenkung der Membrane (15) zwischen der Kontur (19) der Membrane (15) und der Kontur (18) des Stützkörpers (16) ein Abstand von mindestens 0,1 Millimeter besteht.

4. Elektrodynamischer Tauchspulen-Geber nach einem der Ansprüche 1 bis 3, dadurch gekennzeichnet, daß der Stützkörper (16; 116) ein Spritzguß- oder Druckgußteil ist.

## Claims

1. Thread tensile strength sensor (1) for monitoring thread tensile strength on the running thread (3) of a textile machine with an elctrodynamic moving coil transmitter, the moving coil (7) of which is mounted on two spaced apart flexible, thin-walled mounts (9, 15), wherein the mount (15) adjacent to a sensor (14) for the running thread (3) is accessible from the front side, characterised in that the flexible, thin-walled mount (15) has concentrically arranged beads (17a, 17b, 17c), in that on the side of the flexible, thin-walled mount (15) facing the moving coil (7) a support body (16; 116) is arranged a short distance therefrom, in that the side of the support body (16; 116) facing the mount (15) has a contour (18; 118) which essentially is aligned with the contour (19) of the mount (15) facing the support body (16; 116) and in that the distance between the flexible, thin-walled mount (15) and the support body (16; 116) is so great that even with a measurement determined maximum displacement (21) of the mount (15) towards the support body (16; 116) the mount (15) does not touch the contour (18; 118) of the support body (16; 116).

2. Electrodynamic moving coil transmitter according to claim 1,
characterised in that the distance between the support body (16; 116) and the membrane (15) and the contour (18) of the support body (16; 116) is such that with the measurement determined maximum displacement (21) of the membrane (15) between the contours (18, 9) the distance is essentially constant.

3. Electrodynamic moving coil transmitter according to claim 2,
characterised in that with a measurement determined maximum possible displacement of the membrane (15) between the contour (19) of the membrane (15) and the contour (18) of the support body (16) there is a distance of at least 0.1 millimetres.

4. Electrodynamic moving coil transmitter according to one of claims 1 to 3,
characterised in that the support body (16; 116) is an injection moulding or die casting.

## Revendications

1. Capteur (1) pour mesurer la tension d'un fil sur un fil (3) courant dans une machine textile, avec un transducteur électrodynamique à bobine mobile dont la bobine mobile (7) est placée sur deux supports (9, 15) flexibles, à parois minces, et écartés l'un de l'autre, le support (15) adjacent à un palpeur (14) pour le fil (3) courant étant accessible depuis sa face avant, **caractérisé en ce que** le support (15) flexible à paroi mince présente des nervures (17a, 17b, 17c) placées de façon concentrique, **en ce que** sur le côté dirigé vers la bobine (7) du support (15) flexible à paroi mince est placé un corps d'appui (16, 116) à courte distance du support, en ce que le côté dirigé vers le support (15) du corps d'appui (16, 116) présente un contour (18, 118) qui est adapté essentiellement au contour (19) dirigé vers le corps d'appui (16, 116) du support (15), et **en ce que** l'écart entre le support (15) flexible à paroi mince et le corps d'appui (16, 116) est tel que même en cas d'une déviation (21) maximale du support (15) vers le corps d'appui (16, 116) due à une mesure, le support (15) n'entre pas en contact avec le contour (18, 118) du corps d'appui (16, 116).

2. Transducteur électrodynamique à bobine mobile selon la revendication 1, **caractérisé en ce que** l'écart entre le corps d'appui (16, 116) et le diaphragme (15) ainsi que le contour (18) du corps d'appui (16, 116) sont sélectionnés de telle sorte que lors d'une déviation (21) maximale du diaphragme (15) due à une mesure, il y a un écart essentiellement constant entre les contours (18, 19).

3. Transducteur électrodynamique à bobine mobile selon la revendication 2, **caractérisé en ce** que lors d'une déviation (21) maximale possible du diaphragme (15) due à une mesure, il y a un écart d'au moins 0,1mm entre le contour (19) du diaphragme (15) et le contour (18) du corps d'appui (16).

4. Transducteur électrodynamique à bobine mobile selon l'une des revendications 1 à 3, **caractérisé en ce** que le corps d'appui (16, 116) est une pièce moulée par injection ou coulée sous pression.
